# EUROPEAN PATENT APPLICATION

(11) **EP 2 878 740 A1**
(43) Date of publication of application: **03.06.2015**
(21) Application number: 13810553.1
(22) Date of filing: 17.06.2013
(51) Int. Cl.: E04C 1/40, E04C 2/16, E04B 2/00

(54) **CONSTRUCTION ELEMENT USING FIBROUS MATERIAL, AND STRUCTURE COMPRISING SAME (VARIANTS)**

(30) Priority: 26.06.2012 EA 201201086
(71) Applicant: Khovratovich, Andrei Iosifovich, Minsk (BY); Krupslky, Vladimir Pavlovich, d. Leskova (BY)
(72) Inventor: Khovratovich, Andrei Iosifovich, Minsk (BY); Krupslky, Vladimir Pavlovich, d. Leskova (BY)
(74) Representative: Anohins, Vladimirs
(86) International application number: PCT/EA2013/000006
(87) International publication number: WO 2014/000747

(57) **Abstract**

The invention relates to construction elements and structures comprising same, and particularly to construction systems using compressed blocks made of fibrous material in connection with a framework in order to form structures for buildings and constructions. The construction element is comprised of a compressed, shaped block made of fibrous material, and a pair of structural frames, positioned on opposite surfaces of the block. The outer perimeter of the structural frames is equal to the perimeter of the outer surface of the block made of fibrous material. The structural frames of one construction element are interconnected by means of crosspieces, forming a framework, and are tightened by means of a fastener to the block made of fibrous material, thus forming a unified structure. The outer edges of the structural frames are designed to be able to be butt joined together. The invention also includes structures assembled out of construction elements according to the invention.

## Description

The invention relates to construction elements and structures, in particular, to construction systems using compressed blocks made of fibrous material in connection with a framework in order to form structures for buildings and constructions.

WO2009/106793 A1 describes building panels consisting of a wooden framework, a plurality of compressed blocks made of fibrous material embedded within said framework, and tension stabilizing elements. The building panels comprise means providing interconnection between them and constitute large-size modules for building.

Disadvantages of these building panels consist in that they are too large and heavy, which leads to excessive labor intensity in transportation and loading-unloading operations and requires hoisting equipment. Further, the format of such building panels imposes essential limitations upon the architecture and design of structures.

As the closest prior art of the present invention, the subject-matter of the Patent US5749199 is taken, which discloses a construction element and structure, said construction element consisting of a straw bale and a pair of structure-forming elements located at opposite horizontal faces of the straw bale, said structure-forming elements being configured to connect adjacent straw bales. Within a skeletal framework, the construction elements are stacked one over the other in row in "running bond," said structure-forming elements form chords of an erection truss. Said erection truss additionally comprises series of vertical tie-rods.

However, disadvantages of the prior art consist in limitations relating to the structure and number of storeys in a building, as well as to the shape and size of the roof, to the structure of the rafter system and to the pattern of the load transfer to the walls.

The purpose of the present invention consists in providing a versatile construction element that would satisfy the environmental, economic, and energy-efficiency requirements to be met by the buildings using such a construction element, which construction element would have both a sufficient structural strength and a high thermal resistance, which construction element would be non-shrinkable, easy to assemble into a building structure and easy to manufacture, and would not be resource-consuming.

The above purpose is achieved by providing a construction element consisting of a compressed and shaped block made of fibrous material, and a pair of structure-forming elements located at opposite surfaces of the block, said structure-forming elements being configured as structural frames with their outer perimeter equal to the perimeter of the outer surfaces of the block. The structural frames of the construction element are interconnected by means of at least one crosspiece, forming a framework, and tied up by means of mounting hardware to the block made of fibrous material, thus forming a unified structure.

A preferred embodiment of the invention provides that at least one of the structural frames of the construction element further comprises at least one reinforcing patch.

Another embodiment of the invention provides that plaster is applied to at least one surface of the compressed and formed block made of fibrous material, the plaster being applied within the structural frames, the inner edge of at least one of the elements of each structural frame having a groove or a tongue, or being rabbeted on the side bordering the block.

The outer edges of the structural frames of the construction element are configured to be butt-joined.

One of embodiments of the invention provides that grooves are made on the outer edges of the structural frames.

Another embodiment of the invention provides that tongues are made on the outer edges of the structural frames.

Still another embodiment of the invention provides that tongues are made on two outer edges of each structural frame, grooves being made on the remaining two outer edges thereof.

Still another embodiment of the invention provides that the outer edges of the structural frames are rabbeted.

Further, the invention relates to a construction structure consisting of construction elements which have grooves on the outer edges of structural frames thereof. Said construction elements are stacked, the outer edges of their structural frames being butt to butt and interconnected by means of load-bearing laths sunk in the grooves. Said load-bearing laths are profiled members arranged without interspaces and forming a joint tie between adjacent blocks.

Further, the invention relates to a construction structure consisting of construction elements which have tongues on the outer edges of structural frames thereof. Said construction elements are stacked checker-wise, the outer edges of their structural frames being butt to butt and interconnected by means of a tongue-and-groove butt joint.

Further, the invention relates to a construction structure consisting of construction elements which have grooves on two and tongues on the other two edges of structural frames thereof. Said construction elements are stacked, the outer edges of their structural frames being butt to butt and interconnected by means of a tongue-and-groove butt joint.

Further, the invention relates to a construction structure consisting of construction elements which have structural frames with rabbeted outer edges. Said construction elements are stacked, the outer edges of their structural frames being butt to butt and interconnected by means of a rabbet joint.

The above-characterized preferred embodiments of the invention are illustrated in the following drawings:
Fig. 1 view of the construction element with grooves on the outer edges of its structural frame;
Fig.2 shows a side view of the construction element with grooves on the outer edges of its structural frame;
Fig.3 shows a top view of the construction element with grooves on the outer edges of its structural frame.
Fig.4 view of a construction element with grooves and tongues on the outer edges of its structural frame.
Fig.5 shows a side view of the construction element with grooves and tongues on the outer edges of its structural frame.
Fig.6 shows a top view of the construction element with grooves and tongues on the outer edges of its structural frame.
Fig.7 shows a cross section of a structural frame with its outer edge rabbeted.
Fig. 8 shows a fragmental front view of a construction structure formed by two rows of construction elements with grooves on the outer edges of their structural frame.
Fig.9 shows a section A-A through a fragmental front view of a construction structure formed by construction elements with grooves on the outer edges of their structural frame.
Fig.10 shows view A of a butt joint of construction elements with grooves on the outer edges of their structural frame.
Fig.11 shows a fragmental front view of a construction structure formed by two rows of construction elements with grooves and tongues on the outer edges of their structural frame.
Fig.12 shows a section B-B through a fragmental front view of a construction structure formed by construction elements with grooves and tongues on the outer edges of their structural frame.
Fig.13 shows view A of a butt joint of construction elements with grooves and tongues on the outer edges of their structural frame.

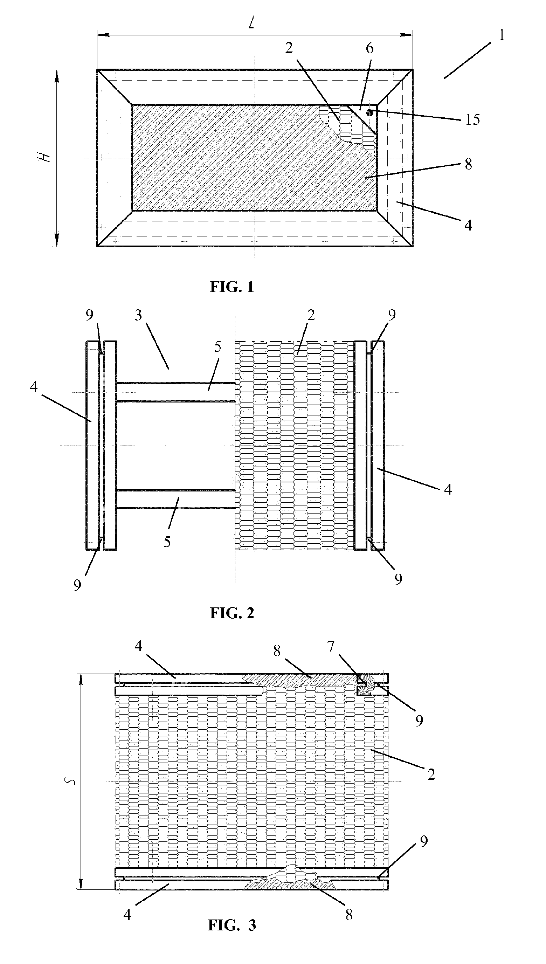

A construction element 1 (Figs.1-2) consists of compressed and formed block 2 and framework 3, the latter consisting of two structural frames 4 and crosspieces 5 interconnected by means of mounting hardware 15.

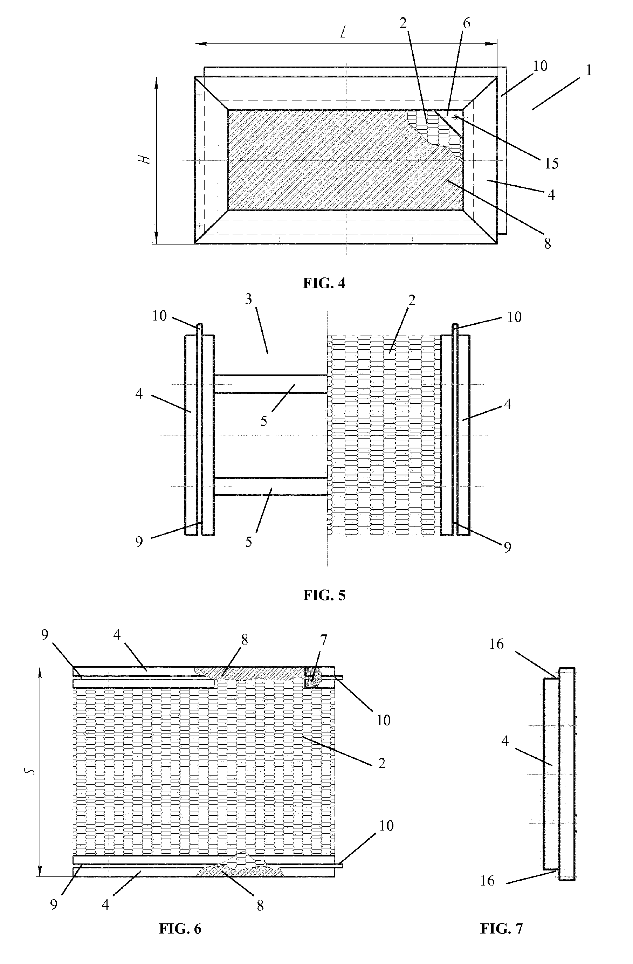

Adjacent elements of the framework 4 are interconnected with diagonal reinforcing patch 6 (Figs.1 and 4).

The inner edges of the structural frames 4 are furnished with grooves 7 (Fig.3), or tongues, or they are rabbeted.

Plaster 8 (Figs.1 and 3) is applied on the surfaces of the block 2 within the frameworks 4.

Figs.1 and 3 show a construction element 1 having grooves 9 on the outer edges of its structural frames 4.

Figs.4-6 show a construction element 1 having grooves 9 on two outer edges of its structural frames 4 and tongues 10 on the remaining two outer edges thereof.

Fig.7 shows a cross section of a structural frame 4 with its outer edge rabbeted with a rabbet 16.

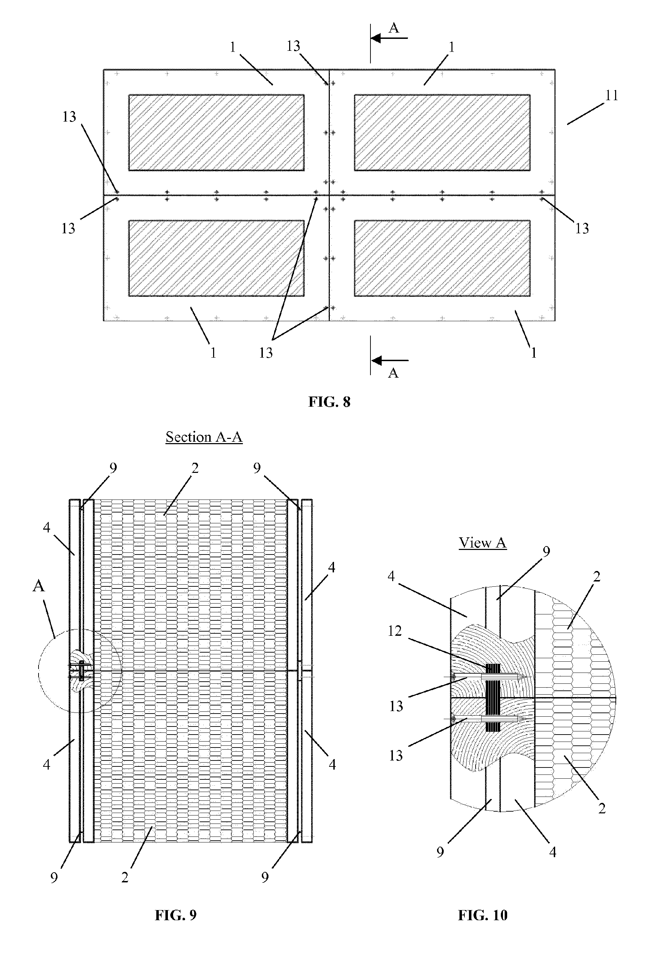

The embodiment of the construction structure 11 shown in Figs. 8-10 consists of construction elements 1 having grooves 9 on the outer edges of their structural frames 4. Said construction elements 1 are stacked one over the other in row, the outer edges of their structural frames 4 being butt to butt (Fig.9), adjacent construction elements 1 being interconnected by means of horizontal and vertical load-bearing laths 12 sunk in grooves 9 (Fig.10). The structural frames 4 of adjacent construction elements 1 are fixed with a corresponding bearing lath 12 by fasteners 13 (Fig.10).

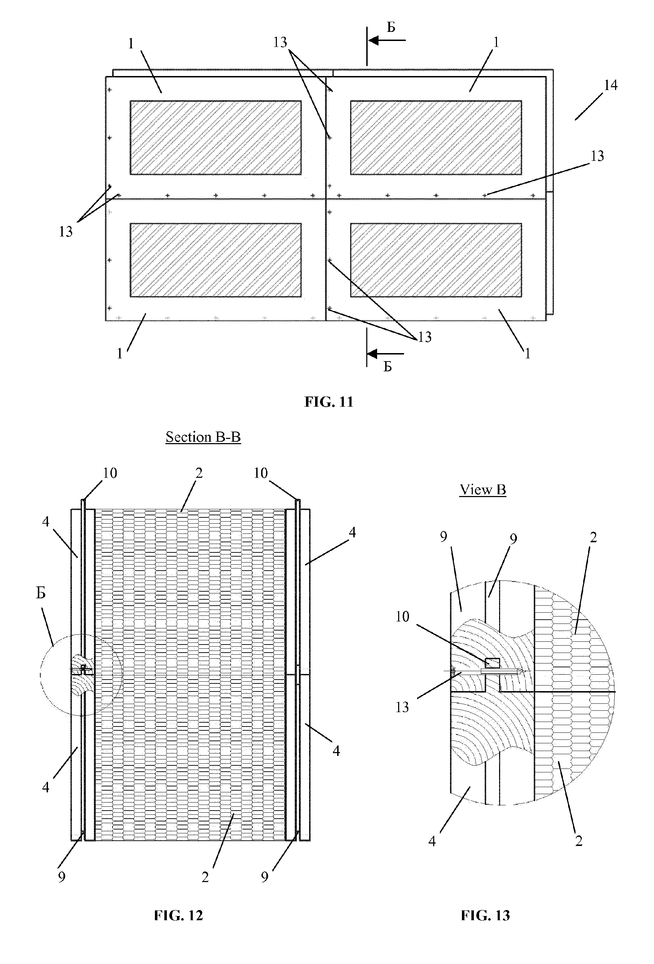

The embodiment of the construction structure 14 shown in Fig.11 consists of construction elements 1 having grooves 9 on two outer edges of their structural frames 4 and tongues 10 on the remaining two outer edges thereof. Said construction elements 1 are stacked one over the other in row, the outer edges of their structural frames 4 being butt to butt (Fig.12), the construction elements 1 being interconnected by a tongue-and groove joint fixed by fasteners 13 (Fig.13).

In an embodiment of the construction structure (not shown) consisting of construction elements 1 with tongues 10 on the outer edges of structural frames 4 thereof and of construction elements 1 with grooves 9 on the outer edges of structural frames thereof, the construction elements 1 may be stacked checker-wise, the outer edges of their structural frames 4 being butt to butt, interconnected by means of a tongue-and-groove butt joint, and fixed by fasteners 13.

In an embodiment of the construction structure (not shown) consisting of construction elements 1 with rabbets 16 on the outer edges of structural frames 4 thereof, the construction elements 1 may be stacked in row and interconnected by a rabbet joint.

The construction elements 1 are manufactured in the following way. A duly shaped block 2 with a density of 100-140 kg/m³ from a dry (i.e., with its natural moisture content) fibrous material, e.g., deseeded straw (of rye, wheat, oat etc., or of mixtures thereof) is formed at a certain pressure. At a rough-workpiece stage, grooves 9, tongues 10, or rabbets 16 are formed on the edges of structural frames 4. Then locations for mounting hardware are appointed on the outer walls of the grooves 9 and the outer walls of the rabbet 16 of the structural frames 4. Crosspieces 5 are connected to one of the structural frames 4 and inserted in the formed block 2. On the yonder side of the block 2, the crosspieces 5 are connected to a second structural frame 4. Then the parts of a framework 3 are tightened by mounting hardware 15.

Subsequently, plaster 8 is applied on the surface of the block 2 inside the structural frame 4, whereupon drying is performed.

Assembling the construction structure 11 from construction elements 1 having grooves 9 on the outer edges of their structural frames 4 is performed by means of stacking the construction elements 1 in row, the outer edges of their structural frames 4 being butt to butt and interconnected by means of load-bearing laths 12 sunk in the grooves 9, said load-bearing laths 12 being arranged without interspaces and forming a joint tie between two construction elements 1.

Assembling the construction structure 11 from construction elements 1 having grooves 9 on two outer edges of their structural frames 4 and tongues 10 on the remaining two outer edges thereof is performed by means of stacking the construction elements 1 in row, the outer edges of their structural frames 4 being butt to butt, grooved edges of the structural frames 4 of a construction element 1 being connected to tongued edges of the structural frames 4 of an adjacent construction element 1 thus forming a tongue-and-groove butt joint.

Assembling the construction structure 11 from construction elements 1 having grooves 9 on the outer edges of their structural frames 4 and from construction elements 1 having tongues 10 on the outer edges of their structural frames 4 is performed by stacking the construction elements 1 checker-wise, grooved edges of the structural frames 4 of a construction element 1 being connected to tongued edges of the structural frames 4 of an adjacent construction element 1 thus forming a tongue-and-groove butt joint.

Assembling the construction structure 11 from construction elements 1 having rabbets 16 on the outer edges of their structural frames 4 is performed by stacking the construction elements 1 with the edges of their structural frames 4 butt to butt, the edges of structural frames 4 of adjacent construction elements being interconnected by means of a rabbet joint.

In the course of assembling a construction structure from construction elements 1 using load-bearing laths 12, all edges of the structural frames 4 of each construction element 1 are tied up with said load-bearing laths 12 along the edges of the structural frames 4 by means of fasteners 13.

In the course of assembling a construction structure from construction elements 1 having grooves 9 and tongues 10 in the edges of structural frames 4, the tongue-and-groove joint thereof is tied up by means of fasteners 13 along the edges of the grooved structural frames 4.

In the course of assembling a construction structure from construction elements having rabbeted edges of structural frames 4, their rabbet joint being tied up along the edges by means of fasteners 13.

Each fastener 13 penetrates a load-bearing lath 12, or a tongue 10, or a wall of rabbet 16 and is locked in the wall of a groove 9 or the wall of a rabbet 16 of an adjacent construction element 1.

Thus assembled construction elements support loads as a unitary three-dimensional system with vertical, horizontal, transverse, and diagonal load-bearing ties, and with outer and inner structured working surfaces.

In a preferred embodiment of the invention, the construction element is formed as a parallelepiped with dimensions L, H, and S, where L is the length, H is the height, and S is the thickness of the parallelepiped. The L dimension is decisive for the versions of various structural elements [of a building] such as corners, openings etc. The S dimension is decisive for the thermal resistance of a wall. A particular set of elements for a construction structure or for a building can include construction elements with differently embodied edges of the structural frames, with different proportions of the dimensions of the construction elements, and with differently shaped construction elements, e.g., delta-shaped construction elements for frontispieces or cranked construction elements for corner windows.

In a preferred embodiment of the invention, the structural frames are wooden. However, the framework may include elements from different materials, such as plastic, metal, etc. The wooden elements of the framework may be treated with colorant impregnating agents, fire-protective and bio-protective agents, or they may be made of thermally modified wood in order to enhance corresponding resistant characteristics of the article.

The plaster may have different makeup for different sides of the block.

The cross-sections of the grooves and tongues on the outer edges of the structural frames may be rectangular or of another shape.

The construction elements are butted with each other by the edges of structural frames in a tongue-and-groove butt joint forming a labyrinth windbreak. Within each construction element, the butt takes place on dry planes of the blocks, the fibers protruding and inosculating in the butt region forming a labyrinth windbreak too, contributing to the wind tightness. The plaster on the outer surfaces of the block forms smooth reliefs, contributes to fire- and bio-resistivity, serves as a windbreak, and is determinative for the vapor transmission rate.

The forms and sizes of the construction elements may be standardized. A standardized range of sizes of construction elements of various forms makes it possible, when designing various buildings and structures, to calculate precisely the required quantity and types of the construction elements thus avoiding overstock of constructional materials.

These construction elements may be generally used in construction structures and buildings of various applications and with various numbers of floors in combination with corresponding architectural and design concepts.

The construction element of the present invention enables raising rigid shrinkage-resistant and sufficiently high construction structures of any complexity and any geometry applicable for private construction of low-rise buildings.

The use of the construction elements of the present invention in combination with corresponding architectural and design elements, e.g., with reinforced vertical connectors of a special profile, or as built-in construction elements in framing industrial reinforced concrete structures will eliminate any restrictions as to the number of floors.

Further, the construction elements of the present invention may be integrated in heat insulating systems of concrete floors and ceilings.

## Claims

1. A construction element consisting of a compressed and shaped block made of fibrous material and a pair of structure-forming elements located at opposite faces of said block, **characterized in that** said structure-forming elements are configured as structural frames with their outer perimeter equal to the perimeter of the outer surface of the block made of fibrous material, the structural frames of the construction element being interconnected by means of at least one crosspiece, forming a framework, and tied up by means of mounting hardware to the block made of fibrous material, thus forming a unified structure.

2. The construction element according to claim 1, **characterized in that** at least one of said structural frames further includes at least one reinforcing patch.

3. The construction element according to claim 1, **characterized in that** plaster is applied to at least one surface of the block made of fibrous material, the plaster being applied within the structural frame.

4. The construction element according to claim 3, **characterized in that** at least one inner edge of each structural frame has a groove or a tongue, or is rabbeted on the side bordering the block made of fibrous material.

5. The construction element according to claim 1, **characterized in that** the outer edges of the structural frames are configured to be butt-joined.

6. The construction element according to claim 5, **characterized in that** grooves are made on the outer edges of the structural frames.

7. The construction element according to claim 5, **characterized in that** tongues are made on the outer edges of the structural frames.

8. The construction element according to claim 5, **characterized in that** tongues are made on two outer edges of each structural frame, grooves being made on the remaining two outer edges thereof.

9. The construction element according to claim 5, **characterized in that** the outer edges of the structural frames are rabbeted.

10. A construction structure consisting of construction elements, **characterized in that** it is composed of construction elements according to claim 6, said construction elements being stacked, the outer edges of their structural frames being butt to butt and interconnected by means of load-bearing laths sunk in the grooves, said load-bearing laths being profiled members arranged without interspaces and forming a joint tie between adjacent blocks.

11. A construction structure consisting of construction elements, **characterized in that** it is composed of construction elements according to claim 6 and claim 7, said construction elements being stacked checker-wise, the outer edges of their structural frames being butt to butt and interconnected by means of a tongue-and-groove butt joint.

12. A construction structure consisting of construction elements, **characterized in that** it is composed of construction elements according to claim 8, said construction elements being stacked, the outer edges of their structural frames being butt to butt and interconnected by means of a tongue-and-groove butt joint.

13. A construction structure consisting of construction elements, **characterized in that** it is composed of construction elements according to claim 9, said construction elements being stacked, the outer edges of their structural frames being butt to butt and interconnected by means of a rabbet joint.
